# EUROPÄISCHE PATENTSCHRIFT

(11) **EP 2 348 783 B1**
(45) Veröffentlichungstag und Bekanntmachung des Hinweises auf die Patenterteilung: **04.07.2018**
(21) Anmeldenummer: 11150803.2
(22) Anmeldetag: 13.01.2011
(51) Int. Cl.: H04W 84/10, H04W 92/02, H04L 29/06

(54) **Kommunikationsvorrichtung sowie Einrichtung und Verfahren zur Kommunikation**
Communication device and system and method for communicating
Dispositif de communication et dispositif et procédé de communication

(30) Priorität: 14.01.2010 DE 102010004660
(43) Veröffentlichungstag der Anmeldung: 27.07.2011
(73) Patentinhaber: Vodafone GmbH, 40549 Düsseldorf (DE)
(72) Erfinder: Ackermann, Thomas, 50674 Köln (DE); Holländer, Daniel, 44801 Bochum (DE); Hellmann, Christoph, 41462 Neuss (DE); Otto, Marc, 40591 Düsseldorf (DE)
(74) Vertreter: Müller & Schubert

(56) Entgegenhaltungen:
- EP-A1- 2 117 201
- US-A1- 2007 177 495
- US-A1- 2009 156 213
- US-A1- 2009 196 266
- US-A1- 2009 262 682
- Dr. Mehmet Unsoy, Eric Teissandier: "Solving in-Building Challenge with Residential Gateways and Femtocells", Next Generation Networks & Besestations Conference, 4. Dezember 2008 (2008-12-04), XP002636238, Dallas, Texas Gefunden im Internet: URL:http://www.cartagena-capital.com/files /pdfs/dr-unsoy-home-gateway-presentation.p df [gefunden am 2011-05-10]

## Beschreibung

Die vorliegende Erfindung betrifft zunächst eine Vorrichtung zur drahtgebundenen Kommunikation, insbesondere eine Vorrichtung für einen DSL- und/oder Sprachanschluss, sowie eine Vorrichtung zur drahtlosen Kommunikation, insbesondere eine LTE- und/oder HSPA-Mobilfunkvorrichtung. Weiterhin betrifft die Erfindung auch eine Einrichtung sowie ein Verfahren zur Kommunikation, bei der/dem die genannten Vorrichtungen Anwendung finden.

Im Stand der Technik sind Lösungen bekannt, bei denen für Sprach- und Datendienste zuhause DSL-Modems/Router mit integriertem oder über USB ansteckbarem Mobilfunkmodul, beispielsweise HSPA-Sticks, eingesetzt werden. Da sich der DSL-Anschluss mit seinem APL häufig im Inneren des Hauses, und hier beispielsweise im Keller, befindet, und da die Inhouse-Mobilfunkversorgung insbesondere in ländlichen Gebieten nicht sichergestellt ist, kann die Mobilfunkkomponente nur mit großem Aufwand oder gar nicht in räumlicher Nähe des APL genutzt werden. Bei einem APL, dem Abschlusspunkt, handelt es sich insbesondere um den Abschluss des Zugangsnetzes, so dass der APL die Schnittstelle zum Haus- oder Endleitungsnetzwerk darstellt. In Häusern befindet sich der APL in der Regel im Keller.

Um die genannten Probleme zu beseitigen, ist es beispielsweise erforderlich, ein Koaxialkabel mit Außenantenne zu installieren. Dies ist jedoch aufwendig. Auch könnte ein USB-Verlängerungskabel verwendet werden. Allerdings sind derartige Verlängerungskabel nur bis zu fünf Metern spezifiziert, so dass auch diese Lösung, insbesondere in ländlichen Gegenden, nachteilig ist.

Die räumliche Nähe des DSL-Modems/Routers zum APL ist durch die meist schon vorhandene Telefonverkabelung im Haus vorgegeben.

In der US 2009/196266 A1 beispielsweise ist ein Verfahren zur Kommunikation beschrieben, mit dem es möglich ist, einen Austausch von Informationen über den Aktivitätszustand eines Geräts innerhalb eines lokalen Netzwerks vorzunehmen, um eine Netzwerkkonfigurationsliste zu erstellen beziehungsweise upzudaten.

Ausgehend vom genannten Stand der Technik liegt der vorliegenden Erfindung die Aufgabe zugrunde, eine Vorrichtung zur drahtgebundenen Kommunikation, eine Vorrichtung zur drahtlosen Kommunikation, eine Einrichtung zu Kommunikation sowie ein Verfahren zur Kommunikation bereitzustellen, mit der/dem die genannten Nachteile vermieden werden können. Insbesondere soll es möglich werden, auf einfache und dennoch sichere und stabile Weise eine Verbindung zwischen einer drahtgebundenen und einer drahtlosen Vorrichtung herstellen zu können.

Diese Aufgabe wird erfindungsgemäß gelöst durch die Einrichtung zur Kommunikation mit den Merkmalen gemäß dem unabhängigen Patentanspruch 1 sowie das Verfahren zur Kommunikation mit den Merkmalen gemäß dem unabhängigen Patentanspruch 6. Weitere Merkmale und Details ergeben sich aus den Unteransprüchen, der Beschreibung sowie den Zeichnungen. Dabei gelten Merkmale und Details, die im Zusammenhang mit der erfindungsgemäßen Einrichtung zur Kommunikation beschrieben sind, selbstverständlich vollumfänglich auch im Zusammenhang mit dem erfindungsgemäßen Verfahren zur Kommunikation, und jeweils umgekehrt.

Durch die vorliegende Erfindung wird es insbesondere möglich, die Vorrichtung zur drahtlosen Kommunikation kurzfristig oder dauerhaft so zu installieren, dass diese auch im Fall eines Ausfalls der Vorrichtung zur drahtgebundenen Kommunikation, und damit als Fallback-Lösung, genutzt werden kann.

Mit der vorliegenden Erfindung wird insbesondere eine DSL-LTE/HSPA-Kopplung für getrennte Komponenten ermöglicht.

Gemäß dem ersten Aspekt der Erfindung wird eine Einrichtung zur DSL-LTE/HSPA-Kopplung für getrennte Vorrichtungen mit den Merkmalen des unabhängigen Patentanspruchs 1 bereitgestellt.

Erfindungsgemäß handelt es sich bei einer Vorrichtung um eine Vorrichtung für einen DSL- und/oder Sprachanschluss handeln. Ein DSL-Anschluss (Digital Subscriber Line) ist insbesondere ein Anschluss, mit dem Daten mit hoher Übertragungsrate über ein Kommunikationsnetz, beispielsweise ein Telefonnetz, übertragen werden können. Die Vorrichtung zur drahtgebundenen Kommunikation ist in Form eines DSL-Routers, eines DSL-Modems oder dergleichen ausgebildet. Beispielsweise kann die Vorrichtung zur drahtgebundenen Kommunikation im Bereich eines APL, eines Abschlusspunkts, vorgesehen sein.

Erfindungsgemäß ist vorgesehen, dass diese Vorrichtung zur drahtgebundenen Kommunikation eine Schnittstelle zur drahtlosen Kopplung mit einer beziehungsweise an eine Vorrichtung zur drahtlosen Kommunikation aufweist. Dabei ist die Erfindung nicht auf bestimmte Schnittstellentypen beschränkt. Einige vorteilhafte, jedoch nicht ausschließliche Beispiele werden im weiteren Verlauf der Beschreibung näher erläutert.

Alternativ kann die Schnittstelle als Schnittstelle zur Kopplung mittels LAN ausgebildet sein. Ein LAN, ein Location Area Network, ist insbesondere ein leitungsgebundener Zusammenschluss mehrerer elektronischer Endgeräte, beispielsweise von Computern.

Über die Schnittstelle ist die Vorrichtung zur drahtgebundenen Kommunikation mit einer Vorrichtung zur drahtlosen Kommunikation gekoppelt, bei der es sich beispielsweise um eine LTE- und/oder HSPA-Mobilfunkvorrichtung handeln kann.

Eine Vorrichtung zur drahtlosen Kommunikation wird nachfolgend in größerem Detail beschrieben, so dass diesbezüglich auf die nachfolgenden Ausführungen vollinhaltlich Bezug genommen und verwiesen wird.

Erfindungsgemäß wird auch eine Vorrichtung zur drahtlosen Kommunikation bereitgestellt, die als LTE- und/oder HSPA-Mobilfunkvorrichtung ausgebildet ist. Bei einer solchen Vorrichtung handelt es sich insbesondere um einen Anschluss, beispielsweise einen Mobilfunkanschluss, welcher eine möglichst dämpfungsarme Verbindung, beispielsweise Mobilfunkverbindung, erfordert. Vorteilhaft kann es sich um eine HSPA-Mobilfunkvorrichtung handeln. High Speed Packet Access beziehungsweise HSPA ist insbesondere eine Weiterentwicklung des Mobilfunkstandards UMTS. HSPA bietet hohe Datenübertragungsraten, wodurch insbesondere auch das Surfen im Internet erheblich beschleunigt wird. Mittels einer solchen Vorrichtung werden insbesondere auch besonders schnelle Uploads und Downloads ermöglicht. Vorteilhaft kann es sich auch um eine LTE-Mobilfunkvorrichtung handeln. Long Term Evolution beziehungsweise LTE ist insbesondere eine Mobilfunktechnologie, die UMTS ablösen soll. Die Vorrichtung zur drahtlosen Kommunikation kann beispielsweise als Modem, etwa als LTE- und/oder HSPA-Modem, als elektronisches Endgerät, beispielsweise als Mobiltelefon, etwa als LTE- und/oder HSPA-fähiges Mobiltelefon, als Stick, etwa als LTE- und/oder HSPA-Stick, als LTE- und/oder HSPA-Mobilfunkmodu! oder dergleichen ausgebildet sein.

Eine derartige Vorrichtung zur drahtlosen Kommunikation ist erfindungsgemäß gekennzeichnet durch eine Schnittstelle zur drahtlosen Kopplung oder zur Kopplung mittels LAN der Vorrichtung mit einer beziehungsweise an einer räumlich entfernt liegenden Vorrichtung zur drahtgebundenen Kommunikation, insbesondere einer wie weiter oben beschriebenen Vorrichtung, etwa einer Vorrichtung für einen DSL-und/oder Sprachanschluss.

Dabei ist die Erfindung nicht auf bestimmte Schnittstellentypen beschränkt. Einige vorteilhafte, jedoch nicht ausschließliche Beispiele werden im weiteren Verlauf der Beschreibung näher erläutert. Alternativ kann die Schnittstelle als Schnittstelle zur Kopplung mittels LAN ausgebildet sein.

Die beiden vorstehend beschriebenen Komponenten, nämlich die Vorrichtung zur drahtgebundenen Kommunikation, insbesondere für den drahtgebundenen DSL-und/oder Sprachanschluss, welcher insbesondere die Nähe zum APL erfordert, und die Vorrichtung zur drahtlosen Kommunikation, insbesondere der LTE- und/oder HSPA-Mobilfunkanschluss, welcher insbesondere eine möglichst dämpfungsarme Mobilfunkverbindung erfordert, werden erfindungsgemäß räumlich getrennt und dann über alternative Techniken wieder logisch zusammen geführt. Wie dies im Einzelnen geschehen kann, wird nachfolgend anhand vorteilhafter, jedoch nicht ausschließlicher Beispiele näher erläutert.

Vorteilhaft kann die Schnittstelle zur drahtlosen Kopplung der Vorrichtung zur drahtgebundenen Kommunikation und/oder die Schnittstelle zur drahtlosen Kopplung der Vorrichtung zur drahtlosen Kommunikation als Wireless-USB-Schnittstelle ausgebildet sein. Beispielsweise kann vorgesehen sein, dass eine solche Wireless-USB-Schnittstelle, ein drahtloser universeller serieller Bus, in ein DSL-Modem/Router und/oder einen LTE- und/oder HSPA-Mobilfunkanschluss, beispielsweise einen LTE- und/oder HSPA-Stick, integriert ist. Dadurch kann insbesondere ein aus dem Stand der Technik bekanntes nachteiliges USB-Verlängerungskabel eingespart werden. Sowohl Sprach- als auch Datendienste können mit der Vorrichtung zur drahtlosen Kommunikation genutzt werden.

Alternativ oder zusätzlich kann die Schnittstelle zur drahtlosen Kopplung der Vorrichtung zur drahtgebundenen Kommunikation und/oder die Schnittstelle zur drahtlosen Kopplung der Vorrichtung zur drahtlosen Kommunikation als Bluetooth-Schnittstelle ausgebildet sein. Damit können insbesondere auch Daten und Sprache übertragen werden. Vorteilhaft ist die Integration einer Bluetooth-Schnittstelle in ein DSL-Modem/Router, insbesondere für die Übertragung von Daten und Sprache. Damit könnte beispielsweise eine Vorrichtung zur drahtlosen Kommunikation in Form eines HSPA-fähigen Mobiltelefons drahtlos an der Vorrichtung zur drahtgebundenen Kommunikation, beispielsweise an einem DSL-Modem/Router, angebunden werden.

Alternativ oder zusätzlich kann die Schnittstelle zur drahtlosen Kopplung der Vorrichtung zur drahtgebundenen Kommunikation und/oder die Schnittstelle zur drahtlosen Kopplung der Vorrichtung zur drahtlosen Kommunikation als Schnittstelle zu einem WLAN-Netzwerk ausgebildet sein. Bei einem WLAN-Netzwerk, einem Wireless Local Area Network, handelt es sich insbesondere um ein Netzwerk, bei dem die einzelnen Netzwerkkomponenten über Funkverbindungen miteinander verbunden sind.

Vorteilhaft kann vorgesehen sein, dass die Schnittstelle zur drahtlosen Kopplung an einen WLAN-Hotspot ausgebildet ist. Beispielsweise kann es sich dabei um einen WLAN-Hotspot-Router handeln.

Bevorzugt kann weiterhin vorgesehen sein, dass die Vorrichtung zur drahtlosen Kommunikation zur Integration in einem WLAN-Hotspot ausgebildet oder in einem WLAN-Hotspot integriert ist.

Beispielsweise kann ein WLAN-Hotspot, beispielsweise ein WLAN-Hotspot-Router, mit eingebautem LTE- und/oder HSPA-Mobilfunkmodul genutzt werden. Die derzeit erhältlichen Mobilfunk-WLAN-Hotspots unterstützen lediglich die paketorientierte Datenübertragung und beherrschen noch kein WDS (Wireless Distribution System) oder leitungsvermittelte Sprachdienste. Um den WLAN-Hotspot(-Router) für alle Dienste einsetzen zu können, wird dieser vorteilhaft über vorhandenes WLAN, beispielsweise über das WDS-Protokoll, mit der Vorrichtung zur drahtgebundenen Kommunikation, beispielsweise dem DSL-Modem/Router, verbunden. Die Sprachdienste werden dann vorteilhaft in der Vorrichtung zur drahtgebundenen Kommunikation verarbeitet, beispielsweise als VoIP (Voice over IP).

Wenn im Einsatzort, beispielsweise in einem Haus, schon eine LAN-Verkabelung vorhanden ist, kann die letztgenannte Alternative beispielsweise auch als LAN umgesetzt werden anstatt einer WLAN-Verbindung. Im Falle eines LANs kann die Schnittstelle beispielsweise zur Kopplung an einen LAN-Router, ein LAN-Switch oder dergleichen ausgebildet sein.

Die Schnittstelle zur drahtlosen Kopplung der Vorrichtung zur drahtgebundenen Kommunikation und/oder die Schnittstelle zur drahtlosen Kopplung der Vorrichtung zur drahtlosen Kommunikation ist als Wireless-USB-Schnittstelle und/oder als Bluetooth-Schnittstelle ausgebildet.

Alternativ oder zusätzlich kann die Schnittstelle zur drahtlosen Kopplung der Vorrichtung zur drahtgebundenen Kommunikation und/oder die Schnittstelle zur drahtlosen Kopplung der Vorrichtung zur drahtlosen Kommunikation als Schnittstelle zu einem WLAN-Netzwerk, insbesondere als Schnittstelle zu einem WLAN-Hotspot, ausgebildet sein.

Vorteilhaft kann die Einrichtung einen WLAN-Hotspot aufweisen.

In weiterer Ausgestaltung kann in dem WLAN-Hotspot eine Vorrichtung zur drahtlosen Kommunikation, insbesondere eine LTE- und/oder HSPA-Mobilfunkvorrichtung, integriert sein.

Vorzugsweise kann der WLAN-Hotspot eine Wireless-USB-to-LAN-Schnittstelle aufweisen. Insbesondere zur Vermeidung weiterer Schnittstellen in der Vorrichtung zur drahtgebundenen Kommunikation, beispielsweise im DSL-Modem/Router, kann der WLAN-Hotspot, beispielsweise mit Funkmodul, um eine Wireless-USB-to-LAN Schnittstelle intern erweitert werden. Damit wird dann vorteilhaft der WLAN-Hotspot mit der Vorrichtung zur drahtgebundenen Kommunikation, beispielsweise dem DSL-Moden/Router über Wireless-USB gekoppelt. Mit dieser Lösung kann dann insbesondere auch Sprache übertragen werden.

In weiterer Ausgestaltung kann der WLAN-Hotspot eine Komponente zur Umsetzung einer Sprachverbindung von der Vorrichtung zur drahtlosen Kommunikation auf VolP-Daten sowie eine Komponente zur Weiterleitung der VolP-Daten zur Vorrichtung zur drahtgebundenen Kommunikation aufweisen. Auf diese Weise kann eine Sprachverbindung von der Vorrichtung zur drahtlosen Kommunikation, beispielsweise dem Mobilfunkmodul, im WLAN-Hotspot auf VolP umgesetzt und über WLAN/LAN an die Vorrichtung zur drahtgebundenen Kommunikation weitergeleitet werden. Insbesondere kann eine Lösung erzeugt werden, bei der eine Umsetzung der Sprachverbindung vom Funkmodul auf VoIP im WLAN-Hotspot mit eingebautem Mobilfunkmodul und eine Weiterleitung über LAN/WLAN zum VolP Client im DSL-Modem/Router erfolgt.

Insbesondere kann auch eine transparente Weiterleitung des PCM-Voicestreams über WLAN zur Vorrichtung zur drahtgebundenen Kommunikation, beispielsweise zum DSL-Modem/Router, erfolgen.

Gemäß noch einem weiteren Aspekt der Erfindung wird ein Verfahren zur DSL-LTE/HSPA-Kopplung für getrennte Vorrichtungen mit den Merkmalen des unabhängigen Patentanspruchs 6 bereitgestellt.

Die Vorrichtung zur drahtgebundenen Kommunikation und die Vorrichtung zur drahtlosen Kommunikation können in der wie weiter oben beschriebenen Weise ausgebildet sein und funktionieren, so dass auf die Ausführungen weiter oben verwiesen und vollinhaltlich Bezug genommen wird.

Bevorzugt kann das Verfahren in einer wie weiter oben beschriebenen erfindungsgemäßen Kommunikationseinrichtung durchgeführt werden, so dass auf die Ausführungen weiter oben verwiesen und vollinhaltlich Bezug genommen wird. Die vorliegende Erfindung, wie sie vorstehend in den einzelnen Aspekten umschrieben ist, betrifft insbesondere die Anbindung von LTE und/oder HSPA-Diensten an einem DSL-Router und führt zu einer Verbesserung des Services DSL und LTE und/oder HSPA. Der Grundgedanke der vorliegenden Erfindung besteht in der physikalischen Trennung von der Vorrichtung zur drahtgebundenen Kommunikation, beispielsweise einem DSL-Anschluss, und der Vorrichtung zur drahtlosen Kommunikation, beispielsweise einem LTE- und/oder HSPA-Modem und der Kopplung der einzelnen Komponenten über geeignete Schnittstellen, beispielsweise über Kurzstrecken-Drathlos-Technologien. Die vorliegende Erfindung sieht folglich vor, dass die einzelnen Komponenten räumlich getrennt werden, dass insbesondere die Vorrichtung zur drahtlosen Kommunikation, beispielsweise das LTE- und/oder HSPA-Modul, von der Vorrichtung zur drahtgebundenen Kommunikation, beispielsweise der DSL-Box, getrennt ist, und dass zwischen den beiden Komponenten eine drahtlose Verbindung existiert und hergestellt wird.

Die Erfindung wird nun anhand eines Ausführungsbeispiels unter Bezugnahme auf die beiliegenden Zeichnungen näher erläutert. Es zeigen
- Figur 1: in schematischer Ansicht ein Haus vor dem Einbau einer erfindungsgemäßen Einrichtung zur Kommunikation; und
- Figur 2: das in Figur 1 gezeigte Haus nach Einbau der erfindungsgemäßen Einrichtung zur Kommunikation.

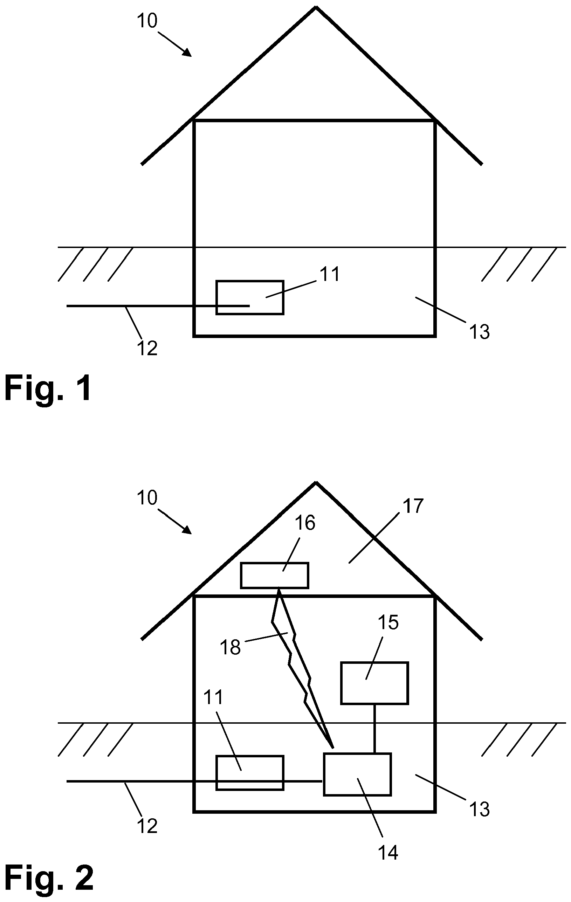

Wie in Figur 1 gezeigt ist, weist ein Haus 10 in der Regel einen Abschlusspunkt 11, einen APL auf, bei dem es sich insbesondere um den Abschluss des Zugangsnetzes 12 handelt, so dass der APL 11 die Schnittstelle zum Hausleitungsnetzwerk darstellt. In Häusern 10 befindet sich der APL 11 in der Regel im Keller 13.

Stand der Technik für Sprach- und Datendienste in Häusern 10, wie in Figur 2 gezeigt ist, sind Vorrichtungen zur drahtgebundenen Kommunikation 14 in Form von DSL-Modems/Routern mit integriertem oder über USB ansteckbarem Mobilfunkmodul, beispielsweise in Form eines HSPA-Sticks. Am DSL-Router/Modem 14 können verschiedene elektronische Geräte wie beispielsweise Kommunikationseinrichtungen 15, etwa das Internet, Telefone und dergleichen, angeschlossen sein.

Da sich der DSL-Anschluss 14 in der Regel im Bereich des APL 11, und damit häufig im Inneren des Hauses 10, beispielsweise im Keller 13, befindet und die Inhouse-Mobilfunkversorgung gerade in ländlichen Gebieten nicht sichergestellt ist, kann die Mobilfunkkomponente bisher nur mit großem Aufwand oder gar nicht in räumlicher Nähe des APL 11 genutzt werden. Dazu ist dann beispielsweise die Installation eines Koaxialkabels mit Außenantenne oder die Verwendung eines USB-Verlängerungskabels, welches aber nur bis zu einer Länge von fünf Metern spezifiziert ist, nötig. Beide Lösungsvarianten sind sehr nachteilig. Die räumliche Nähe des DSL-Modems/Routers 14 zum APL 11 ist durch die meist schon vorhandene Telefonverkabelung im Haus 10 vorgegeben.

Erfindungsgemäß ist nun vorgesehen, dass die beiden Komponenten, nämlich die Vorrichtung 14 für den drahtgebundenen DSL-und Sprachanschluss, welcher die Nähe zum APL 11 erfordert, und die Vorrichtung für die drahtlose Kommunikation 16, beispielsweise in Form eines HSPA-Mobilfunkanschlusses, welcher eine möglichst dämpfungsarme Mobilfunkverbindung erfordert, räumlich getrennt sind und dann über alternative Techniken wieder logisch zusammen geführt werden. Im Ausführungsbeispiel soll sich die Vorrichtung zur drahtlosen Kommunikation 16 im Dachbereich 17 oder Fensterbereich des Hauses 10 befinden. Bei der Vorrichtung zur drahtlosen Kommunikation 16 kann es sich beispielsweise auch um einen LTE-Mobilfunkanschluss handeln.

Sowohl die Vorrichtung 14 zur drahtgebundenen Kommunikation als auch die Vorrichtung 16 zur drahtlosen Kommunikation verfügen über Schnittstellen zur drahtlosen Kopplung 18 miteinander beziehungsweise aneinander, so dass zwischen den beiden Vorrichtungen 14 und 16 eine drahtlose Kommunikation ermöglicht wird. Eine solche drahtlose Kommunikation kann auf unterschiedliche Weise realisiert werden.

Gemäß einer ersten Alternative kann eine Integration von Wireless-USB-Schnittstellen in den DSL-Modem/Router 14 und das HSPA-Modul 16, beispielsweise einen HSPA-Stick, erfolgen. Dadurch wird das USB-Verlängerungskabel eingespart und sowohl Sprach- und Datendienste können mit dem HSPA-Modul 16 genutzt werden.

Eine zweite Alternative sieht die Integration einer Bluetooth-Schnittstelle in das DSL-Modem/Router 14 für die Übertragung von Daten und Sprache vor. Damit könnte ein HSPA-fähiges Mobiltelefon anstatt eines HSPA-Moduls 16, beispielsweise eines HSPA-Sticks, drahtlos am DSL-Modem/Router 14 angebunden werden.

Eine dritte Alternative kann die Nutzung eines WLAN-Hotspot-Routers mit eingebautem HSPA-Mobilfunkmodul 16 vorsehen. Die derzeit erhältlichen Mobilfunk-WLAN-Hotspots unterstützen lediglich die paketorientierte Datenübertragung und beherrschen noch kein WDS (Wireless Distribution System) oder leitungsvermittelte Sprachdienste. Um den WLAN-Hotspot-Router für alle Dienste einsetzen zu können, wird dieser über vorhandenes WLAN, beispielsweise über das WDS-Protokoll, mit dem DSL-Modem/Router 14 verbunden. Die Sprachdienste müssen dann im DSL-Modem/Router 14 intern als VolP verarbeitet werden. Wenn im Haus 10 schon eine LAN-Verkabelung vorhanden ist, kann diese Alternative auch als LAN umgesetzt werden anstatt einer WLAN-Verbindung.

Zur Vermeidung weiterer Schnittstellen im DSL-Modem/Router 14 kann der WLAN-Hotspot mit Funkmodul vorteilhaft um eine Wireless-USB-to-LAN Schnittstelle intern erweitert werden. Damit werden dann WLAN-Hotspot mit DSL-Moden/Router 14 über Wireless-USB gekoppelt. Mit dieser Lösung kann dann auch Sprache übertragen werden.

Vorteilhaft kann eine Umsetzung der Sprachverbindung vom Funkmodul auf VoIP im WLAN-Hotspot mit eingebauten Mobilfunkmodul 16 und Weiterleitung über LAN/WLAN zum VolP Client im DSL-Modem/Router 14 erfolgen. Eine transparente Weiterleitung des PCM-Voicestream über WLAN zum DSL-Modem/Router 14 ist ebenfalls möglich.

### Bezugszeichenliste

- 10: Haus
- 11: Abschlusspunkt (APL)
- 12: Zugangsnetz
- 13: Keller
- 14: Vorrichtung zur drahtgebundenen Kommunikation (DSL-Modem/Router)
- 15: Kommunikationseinrichtung
- 16: Vorrichtung zur drahtlosen Kommunikation (LTE- und/oder HSPA-Mobilfunkmodul)
- 17: Dachbereich
- 18: Drahtlose Kopplung (drahtlose Kommunikation)

## Patentansprüche

1. Einrichtung zur DSL-LTE/HSPA-Kopplung für getrennte Vorrichtungen, **dadurch gekennzeichnet, dass** die Einrichtung eine Vorrichtung (14) zur drahtgebundenen Kommunikation, die als DSL-Router/Modem ausgebildet ist, sowie eine Vorrichtung (16) zur drahtlosen Kommunikation, die als LTE- und/oder HSPA-Mobilfunkvorrichtung ausgebildet ist, aufweist, dass die Vorrichtung (14) zur drahtgebundenen Kommunikation und die Vorrichtung (16) zur drahtlosen Kommunikation räumlich getrennt sind, und dass sowohl die Vorrichtung (14) zur drahtgebundenen Kommunikation als auch die Vorrichtung (16) zur drahtlosen Kommunikation eine Schnittstelle zur drahtlosen Kopplung (18) miteinander aufweisen, welche als Wireless-USB-Schnittstelle und/oder als Bluetooth-Schnittstelle und/oder als Schnittstelle zu einem WLAN-Netzwerk ausgebildet ist, so dass zwischen den Vorrichtungen (14, 16) eine drahtlose Kommunikation zum Austausch von Signalen zur Anbindung von LTE- und/oder HSPA-Diensten an die Vorrichtung (14) ermöglicht wird.

2. Einrichtung nach Anspruch 1, **dadurch gekennzeichnet, dass** die Schnittstelle zu einem WLAN-Netzwerk als Schnittstelle zu einem WLAN-Hotspot ausgebildet ist.

3. Einrichtung nach einem der Ansprüche 1 oder 2, **dadurch gekennzeichnet, dass** die Einrichtung einen WLAN-Hotspot aufweist, und dass in dem WLAN-Hotspot optional die Vorrichtung (16) zur drahtlosen Kommunikation integriert ist.

4. Einrichtung nach Anspruch 3, **dadurch gekennzeichnet, dass** der WLAN-Hotspot eine Wireless-USB-to-LAN-Schnittstelle aufweist.

5. Einrichtung nach Anspruch 3 oder 4, **dadurch gekennzeichnet, dass** der WLAN-Hotspot eine Komponente zur Umsetzung einer Sprachverbindung von der Vorrichtung (16) zur drahtlosen Kommunikation auf VoIP-Daten sowie eine Komponente zur Weiterleitung der VolP-Daten zur Vorrichtung (14) zur drahtgebundenen Kommunikation aufweist.

6. Verfahren zur DSL-LTE/HSPA-Kopplung für getrennte Vorrichtungen, bei dem zwischen einer Vorrichtung (14) zur drahtgebundenen Kommunikation, die als DSL-Router/Modem ausgebildet ist, und einer räumlich entfernt liegenden Vorrichtung (16) zur drahtlosen Kommunikation, die als LTE- und/oder HSPA-Mobilfunkvorrichtung ausgebildet ist, über in den Vorrichtungen (14, 16) vorgesehene Schnittstellen zur drahtlosen Kopplung (18), die als Wireless-USB-Schnittstellen und/oder als Bluetooth-Schnittstellen und/oder als Schnittstellen zu einem WLAN-Netzwerk ausgebildet sind, mittels drahtloser Kommunikation Signale zur Anbindung von LTE- und/oder HSPA-Diensten an die Vorrichtung (14) ausgetauscht werden.

## Claims

1. A device for DSL-LTE/HSPA-coupling for separated devices, **characterized in that** the device comprises a device (14) for wired communication, which is provided as a DSL-router/modem, as well as a device (16) for wireless communication, which is provided as an LTE- and/or HSPA mobile device, that the device (14) for the wired communication and the device (16) for the wireless communication are spatially separated from each other and that each the device (14) for the wired communication as well as the device (16) for the wireless communication comprise an interface for wireless coupling (18) with each other, which is provided as a wireless USB-interface and/or as a Bluetooth-interface and/or as an interface to a WLAN-network, such that between the devices (14, 16) a wireless communication for the exchange of signals for the connection of LTE- and/or HSPA-services to the device (14) is realized.

2. The device according to claim 1, **characterized in that** the interface to a WLAN-network is provided as an interface to a WLAN-hotspot.

3. The device according to anyone of claims 1 or 2, **characterized in that** the device comprises a WLAN-hotspot, and that optionally the device (16) for the wireless communication is integrated in the WLAN-hotspot.

4. The device according to claim 3, **characterized in that** the WLAN-hotspot comprises a wireless-USB-to-LAN-interface.

5. The device according to claim 3 or 4, **characterized in that** the WLAN-hotspot comprises a component for converting a voice connection from the device (16) for the wireless communication to VoIP-data and a component for forwarding the VoIP-data to the device (14) for the wired communication.

6. A method for DSL-LTE/HSPA-coupling for separated devices, by means of which between a device (14) for wired communication, which is provided as a DSL-router/modem, and a device (16) for wireless communication being spatially separated thereof, which is provided as an LTE- and/or HSPA mobile device, via interfaces for wireless coupling (18) being provided in the devices (14, 16), which are provided as wireless USB-interfaces and/or as Bluetooth-interfaces and/or as interfaces to a WLAN-network, by means of wireless communication signals for the connection of LTE- and/or HSPA-services to the device (14) are exchanged.

## Revendications

1. Système de couplage DSL-LTE/HSPA pour des dispositifs séparés, **caractérisé en ce que** le système présente un dispositif (14) pour la communication par fil, qui est conçu sous forme d'un routeur/modem DSL, ainsi qu'un dispositif (16) pour la communication sans fil, qui est conçu sous forme d'un dispositif de radiocommunication mobile LTE et/ou HSPA, **en ce que** le dispositif (14) pour la communication par fil et le dispositif (16) pour la communication sans fil sont séparés physiquement, et **en ce que**, aussi bien le dispositif (14) pour la communication par fil que le dispositif (16) pour la communication sans fil présentent une interface pour leur couplage mutuel sans fil (18), laquelle est conçue sous forme d'une interface USB sans fil et/ou d'une interface Bluetooth et/ou d'une interface à un réseau WLAN, de sorte à permettre entre les dispositifs (14, 16) une communication sans fil pour l'échange de signaux pour le raccordement de services LTE et/ou HSPA au dispositif (14).

2. Système selon la revendication 1, **caractérisé en ce que** l'interface à un réseau WLAN est conçue sous forme d'une interface à un point d'accès sans fil de WLAN.

3. Système selon la revendication 1 ou 2, **caractérisé en ce que** le système présente un point d'accès sans fil de WLAN et **en ce que** dans le point d'accès sans fil de WLAN est intégré de manière facultative le dispositif (16) pour la communication sans fil.

4. Système selon la revendication 3, **caractérisé en ce que** le point d'accès sans fil de WLAN présente une interface USB à un LAN sans fil.

5. Système selon la revendication 3 ou 4, **caractérisé en ce que** le point d'accès sans fil de WLAN présente un composant pour la transformation d'une liaison vocale du dispositif (16) pour la communication sans fil en des données VoIP ainsi qu'un composant pour le transfert des données VoIP au dispositif (14) pour la communication par fil.

6. Procédé de couplage DSL-LTE/HSPA pour des dispositifs séparés, dans lequel entre un dispositif (14) pour la communication par fil, qui est conçu sous forme d'un routeur/modem DSL, et un dispositif (16) situé physiquement à distance, pour la communication sans fil, qui est conçu sous forme d'un dispositif de radiocommunication mobile LTE et/ou HSPA, par le biais d'interfaces prévues dans les dispositifs (14, 16), pour le couplage sans fil (18), qui sont conçues sous forme d'interfaces USB sans fil et/ou d'interfaces Bluetooth et/ou d'interfaces à un réseau WLAN, au moyen d'une communication sans fil sont échangés des signaux pour le raccordement de services LTE et/ou HSPA au dispositif (14).
